# EUROPÄISCHE PATENTSCHRIFT

(11) **EP 0 918 026 B1**
(45) Veröffentlichungstag und Bekanntmachung des Hinweises auf die Patenterteilung: **19.06.2002**
(21) Anmeldenummer: 98117263.8
(22) Anmeldetag: 11.09.1998
(51) Int. Cl.: B65G 21/14, B65G 15/00

(54) **Klappbares Förderband**
Foldable belt conveyor
Bande transporteuse pliable

(30) Priorität: 21.11.1997 DE 29720710 U
(43) Veröffentlichungstag der Anmeldung: 26.05.1999
(73) Patentinhaber: Heissenberger & Pretzler Ges.m.b.H., 8130 Frohnleiten (AT)
(72) Erfinder: Pretzler, Rudolf, A-8600 Bruck/Mur (AT); Heissenberger, Josef, A-8045 Graz (AT)
(74) Vertreter: Laufhütte, Dieter, Dr.-Ing.

(56) Entgegenhaltungen:
- DE-A- 2 701 699
- DE-A- 3 625 297
- DE-B- 1 228 195

## Beschreibung

Die vorliegende Erfindung betrifft ein Förderband nach dem Oberbegriff des Anspruch 1.

Derartige Förderbänder finden zur Aufnahme und Förderung von Fördergut beispielsweise von Aufbereitungs-, Sieb- und Zerkleinerungsmaschinen breite Verwendung. Insbesondere bei mobilen Arbeitsgeräten, die häufig auf- und abgebaut werden und gut transportierbar sein müssen, ist es von erheblicher Bedeutung, daß die Förderbänder auf einfache Weise und platzsparend eingeschwenkt werden können. Bei gattungsgemäßen Förderbändern werden dazu die aufgesteckten Bordwände, die während des Betriebes die seitliche Begrenzung des Fördergutes bilden, entnommen, um ein Einschwenken des Förderbandes zu ermöglichen. Insbesondere bei schwerem und sperrigem Fördergut sind die Bordwände massiv und stabil ausgeführt, um den auftretenden Belastungen während des Betriebes sicher standzuhalten und nicht beschädigt zu werden. Eine derart stabile Ausführung bringt den Nachteil mit sich, daß die Bordwände ein entsprechend hohes Gewicht aufweisen, wodurch deren Montage und Demontage erheblich erschwert werden.

Aus der DE 122 81 95 B ist bereits ein Förderband nach dem Oberbegriff des Anspruchs 1 bekannt. Hier sind Bordwände zur seitlichen Fixierung von Fördergut seitlich starr hochgezogen. Sie sind zusammen mit dem Förderband um ein Gelenk verschwenkbar. Allerdings hat das gesamte Förderband aufgrund der hochgezogenen Bordwände eine vergleichsweise hohe Bauhöhe, so daß diese vorbekannten Förderbänder für den Transport nicht kompakt zusammengelegt werden können.

Es ist die Aufgabe der vorliegenden Erfindung, ein gattungsgemäßes Förderband dahingehend weiterzubilden, daß dessen Auf- und Abbau einfach durchführbar ist, wobei es im abgebauten Zustand kompakt zusammenlegbar ist.

Diese Aufgabe wird erfindungsgemäß durch die Kombination der Merkmale des Anspruchs 1 gelöst. So sind die Bordwände wenigstens im Bereich des Gelenkes des Förderbandes um eine sich in ihrer Längsrichtung erstreckende Achse verschwenkbar und in ihrem verschwenkten Zustand um eine Achse verschwenkbar, die sich parallel zur Schwenkachse des Gelenkes des Förderbandes erstreckt. Dadurch wird es möglich, auf steckbare Bordwände gänzlich zu verzichten, da erfindungsgemäß ein Einschwenken des Förderbandes auch mit fest angeordneten Bordwänden möglich ist. Dazu ist es notwendig, daß bei dem Abbau des Förderbandes zunächst ein Verschwenken der Bordwände um die eine sich in Richtung ihrer Längsrichtung erstreckende Achse erfolgt. Nach dem Verschwenken erstrekken sich die Wände vorteilhaft parallel zur Oberfläche des Förderbandes bzw. zur Förderebene. In einem zweiten Schritt wird nunmehr das Förderband um das Förderbandgelenk in eine gewünschte, für den Transport geeignete Position verschwenkt, wobei erfindungsgemäß die Bordwände ebenfalls verschwenkt werden. Dazu ist es notwendig, daß die Bordwände im verschwenkten Zustand im Bereich des Gelenkes des Förderbandes um eine Achse verschwenkbar sind, die sich parallel zur Schwenkachse des Förderbandgelenkes erstreckt. In umgekehrter Reihenfolge erfolgt das Montieren des Förderbandes entsprechend zunächst dadurch, daß das Förderband um das Förderbandgelenk in seine gewünschte Position verschwenkt wird. Im Anschluß daran werden die Bordwände beispielsweise in eine senkrechte Position verschwenkt.

Die erfindungsgemäße Vorrichtung ermöglicht zum einen ein schnelles und platzsparendes Verschwenken des Förderbandes, wobei die Verwendung von steckbaren Bordwänden, die üblicherweise bei gattungsgemäßen Förderbändern eingesetzt werden, nicht erforderlich ist. Somit entfällt auch das umständliche Hantieren der einzelnen Bordwände bei deren Montage und Demontage. Ferner wird die Möglichkeit ausgeschlossen, daß einzelne Bordwände oder Bordwandsegmente versehentlich verloren gehen, da diese nicht zwingend lösbar mit dem Förderband in Verbindung stehen müssen.

Gemäß der vorliegenden Erfindung sind die Bordwände aus Segmenten aufgebaut, die an den Randbereichen ihrer aneinandergrenzender Flächen mittels Scharnieren in Verbindung stehen. Im aufgerichteten Zustand der Bordwände können sich die Scharniere somit in einem oberen wie auch in einem unteren Bereich der Bordwände erstrecken und bilden eine Verbindung zu den jeweils angrenzenden Bordwänden. Ebenso ist es möglich, daß die Bordwände mittels eines durchgehenden Scharniers miteinander in Verbindung stehen. Die Scharniere ermöglichen ein Verschwenken der Bordwände um eine zur Schwenkachse des Förderbandgelenkes parallele Achse.

In weiterer Ausgestaltung der vorliegenden Erfindung ist vorgesehen, daß wenigstens eines der Scharniere mit einem Gelenk in Verbindung steht, um das das Scharnier um eine sich in Längsrichtung der Bordwände erstreckende Achse verschwenkbar ist. Während das Gelenk die Verschwenkbarkeit der Bordwandsegmente um eine sich in deren Längsrichtung erstreckende Achse ermöglicht, erfolgt das Verschwenken der Bordwandsegmente um eine zur Schwenkachse des Förderbandgelenkes parallele Achse mittels der Segmentscharniere. Ebenso ist es denkbar, daß Mehrfachgelenke vorgesehen sind, die das Verschwenken in beide Richtungen ermöglichen.

Gemäß einer bevorzugten Ausgestaltung der vorliegenden Erfindung ist vorgesehen, daß im Bereich des Gelenkes des Förderbandes mehrere Gelenke vorgesehen sind, die jeweils mit einem Scharnier der Bordwandsegmente verbunden sind. Eine derartige Anordnung ist erforderlich, wenn die Schwenkachse des Förderbandes und die Schwenkachse der eingeschwenkten Bordwandsegmente nicht fluchten. In diesem Fall ist es notwendig, die Bordwand mehrteilig auszuführen, wobei die entsprechende Verbindung unter den Bordwänden mittels der erfindungsgemäßen Scharniere und ein Verschwenken um eine sich in Längsrichtung der Bordwände erstreckende Achse mittels der Gelenke erfolgen kann, die jeweils mit einem Scharnier der Bordwandsegmente verbunden sind.

In weiterer Ausgestaltung der vorliegenden Erfindung ist vorgesehen, daß die Bordwände von dem Förderband lösbar ausgeführt sind. Die lösbare Ausführung der Bordwände ermöglicht beispielsweise die Änderung der Bordwandhöhe oder -stärke. Ein Austausch kann erforderlich sein, wenn das Fördergut in Art, Beschaffenheit oder Menge geändert wird. Die Lösbarkeit der Bordwände ermöglicht einen flexiblen Einsatz des Förderbandes, wobei ein Lösen der Bordwände erfindungsgemäß jedoch weder bei der Montage noch bei der Demontage des Förderbandes erforderlich ist.

Es kann ferner eine Hydraulikkolbeneinheit vorgesehen sein, bei der die Kolbenposition vom Verschwenkwinkel des Förderbandes abhängt und mittels derer das Förderband im ausgeschwenkten Zustand arretierbar ist. Eine derartige Hydraulikkolbeneinheit kann das unerwünschte Aufschwenken des Förderbandes im Transportzustand verhindern und dient ferner dazu, im ausgeschwenkten Zustand des Förderbandes die Endposition bzw. den Endwinkel der Verschwenkbewegung festzulegen.

Die Hydraulikkolbeneinheit kann antreibbar sein, was insbesondere dann von Vorteil ist, wenn das Förderband ein hohes Gewicht aufweist und das Verschwenken per Hand entsprechend aufwendig ist.

In weiterer Ausgestaltung der vorliegenden Erfindung ist vorgesehen, daß das Gelenk des Förderbandes arretierbar ist. Eine derartige Arretierung ist von Vorteil, wenn verhindert werden soll, daß durch Fehlbedienungen ein Einschwenken des Förderbandes erfolgen soll, bevor die Bordwände eingeschwenkt sind. Die Arretierung wird somit erst dann freigegeben, wenn sich die Bordwände in einer Position befinden, die ein problemloses und beschädigungsfreies Einschwenken des Förderbandes ermöglichen.

Besonders vorteilhaft ist es, wenn das Gelenk, um das das Scharnier der Segmente um eine sich in Längsrichtung der Bordwände erstreckende Achse verschwenkbar ist, eine Entriegelung aufweist, durch die die Arretierung des Förderbandgelenkes lösbar ist. In diesem Fall wird ein versehentliches Verschwenken des Förderbandes entsprechend solange vermieden, bis die Entriegelung des Gelenkes die Arretierung des Förderbandgelenkes freigibt.

Weitere Einzelheiten und Vorteile der vorliegenden Erfindung werden anhand eines in der Zeichnung dargestellten Ausführungsbeispiels näher erläutert. Es zeigen:
- Fig. 1:: eine Seitenansicht des erfindungsgemäßen Förderbandes im rechtwinklig verschwenkten Zustand mit eingeschwenkten Bordwänden,
- Fig. 2:: eine Seitenansicht des erfindungsgemäßen Förderbandes im ausgeschwenkten Zustand mit eingeschwenkten Bordwänden,
- Fig. 3:: eine Seitenansicht des erfindungsgemäßen Förderbandes im ausgeschwenkten Zustand mit ausgeschwenkten Bordwänden,
- Fig. 4:: eine vergrößerte Darstellung des Förderbandgelenkes sowie der Scharniere und Gelenke der Bordwandsegmente im ausgeschwenkten Zustand gemäß Fig. 3,
- Fig. 5:: eine vergrößerte Darstellung des Förderbandgelenkes sowie der Gelenke und Scharniere der Bordwandsegmente im verschwenkten Zustand des Förderbandes gemäß Fig. 1,
- Fig. 6:: eine Draufsicht auf das erfindungsgemäße Förderband mit ausgeschwenkten Bordwänden gemäß Fig. 3 und
- Fig. 7:: eine Schnittdarstellung des erfindungsgemäßen Förderbandes gemäß Linie A-A in Fig. 6.

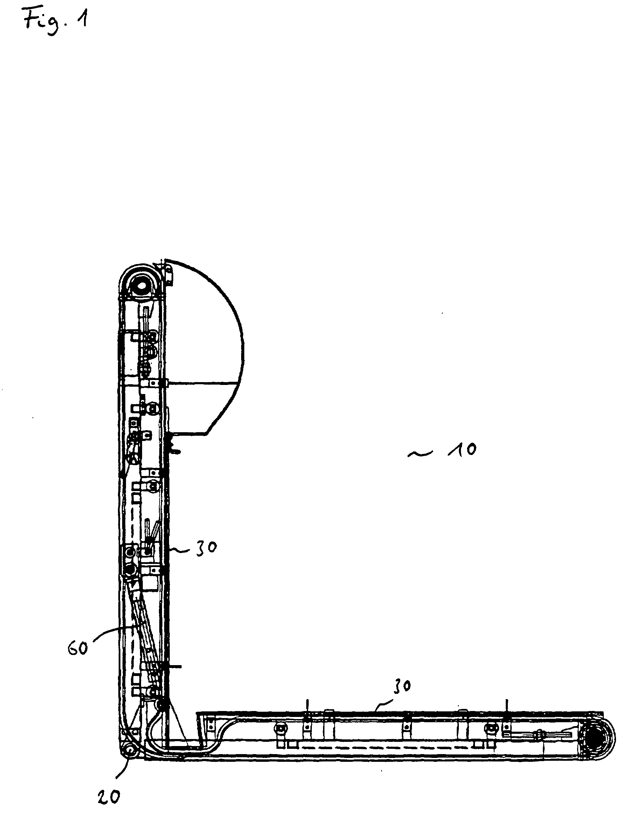

Fig. 1 zeigt das erfindungsgemäße Förderband 10 im rechtwinklig verschwenkten Zustand und mit eingeschwenkten Bordwänden 30. Auf der Unterseite des Förderbandes 10 befindet sich das Förderbandgelenk 20, um das das Förderband 10 aus der Transportstellung in eine Betriebsstellung schwenkbar ist. Auf dem gemäß Fig. 1 nach oben verschwenkten Teil des Förderbandes 10 befindet sich die Hydraulikkolbeneinheit 60, mittels derer das Förderband 10 im ausgeschwenkten Zustand arretierbar ist.

Fig. 2 zeigt das erfindungsgemäße Förderband 10 im um das Förderbandgelenk 20 ausschwenkten Zustand. In dieser Position befinden sich die Bordwände 30 noch im verschwenkten Zustand und erstrecken sich parallel zur Förderebene des Förderbandes 10. Der Kolben der Hydraulikkolbeneinheit 60, der in seinem Endbereich schwenkbar an dem Gelenk 22 angeordnet ist, befindet sich gemäß Fig. 2 in seiner Endposition und legt somit einen maximalen Verschwenkwinkel bzw. eine horizontal verlaufende Förderebene des Förderbandes 10 fest.

Das Gelenk 22 sowie das Förderbandgelenk 20 sind an der Platte 24 angeordnet, die mit dem rechten, gemäß Fig. 1 nicht verschwenkten Teil des Förderbandes 10 in Verbindung steht.

In Fig. 3 ist das erfindungsgemäße Förderband im betriebsbereiten Zustand dargestellt. Hier sind die Bordwände 30 senkrecht zur Förderebene des Förderbandes 10 verschwenkt und definieren somit eine seitliche Begrenzung des Fördergutes. Es ist möglich, daß die Bordwände 30 nach dem Ausschwenken des Förderbandes 10 um das Förderbandgelenk 20 manuell oder auch mittels eines entsprechenden Verschwenkmechanismus gleichzeitig mit dem Ausschwenken des Förderbandes 10 in ihre Betriebsposition gebracht werden.

Die Fig. 1 bis 3 verdeutlichen, daß die Bordwände 30 im Transportzustand (Fig. 1), wie auch im Betriebszustand (Fig. 3) stets mit dem Förderband 10 verbunden sind, so daß erfindungsgemäß weder ein separater Transport der Bordwände noch das schwierige Aufstecken bzw. Abnehmen und Hantieren mit einzelnen Bordwänden erforderlich ist. Vielmehr ermöglichen die Bordwände im eingeschwenkten Zustand gemäß Fig. 2 ein problemloses Verschwenken des Förderbandes 10 in seine Transportposition.

Fig. 4 zeigt eine vergrößerte Darstellung des Förderbandgelenkes 20 sowie der Scharniere 40, 40' der Bordwandsegmente 32. Man erkennt, daß die Bordwandsegmente 32 in ihrem oberen und unteren Bereich jeweils mittels zweier Scharniere 40, 40' in Verbindung stehen. Die Scharniere 40, 40' ermöglichen das Verschwenken der Bordwandsegmente 32 gegeneinander um eine Achse, die sich parallel zur Schwenkachse des Förderbandgelenkes 20 erstreckt, wenn die Bordwand 30 entsprechend eingeschwenkt ist.

Die drei im unteren Bereich der Segmente 32 angeordneten Scharniere 40' sind mittels der Gelenke 50 um eine Achse verschwenkbar, die sich in Längsrichtung der Bordwände erstreckt, wodurch es entsprechend ermöglicht wird, daß die Bordwände 30 aus der in Fig. 4 dargestellten Position in eine Position gemäß Fig. 2 verschwenkt werden. Das Scharnier 40' sowie das Gelenk 50 sind ebenso zu einem Mehrfachgelenk kombinierbar, daß entsprechend ebenfalls die notwendigen Schwenkbewegungen in beiden Richtungen ermöglicht.

Im Bereich unterhalb der Gelenke 50 verläuft der oben befindliche Abschnitt des Förderbandes 100.

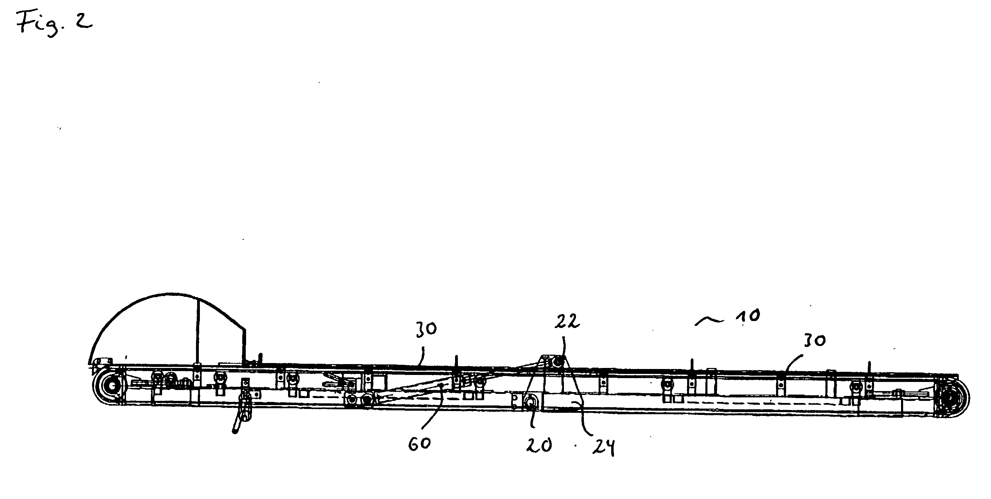

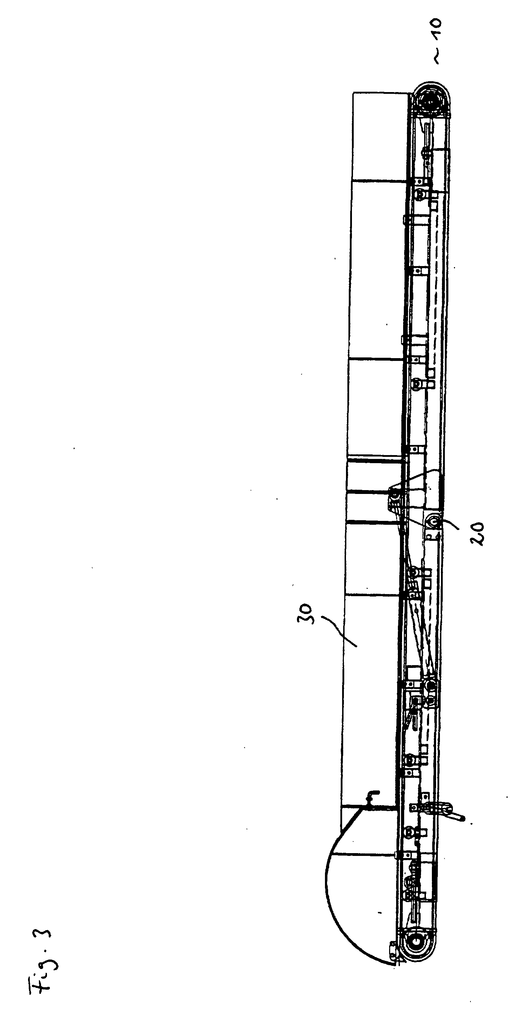

Fig. 5 zeigt die vergrößerte Darstellung des Förderbandgelenkes 20 sowie der Gelenke 50 im rechtwinklig verschwenkten Zustand des Förderbandes, nachdem die Bordwände 30 entsprechend eingeschwenkt wurden. Die Segmente 32 der Bordwand 30 sind nunmehr um ihre Scharniere derart gegeneinander verschwenkt, daß sich die in Fig. 5 dargestellte Anordnung ergibt, bei der der oben liegende Teil des Fördergurtes 100 entsprechend um die verschwenkten Bordwandsegmente 32 geführt wird. Fig. 5 verdeutlicht, daß gemäß dem vorliegenden Ausführungsbeispiel drei Gelenke 50 vorgesehen sind, die das Einschwenken bzw. ein späteres Ausschwenken der Bordwandsegmente 32 bzw. das Verschwenken des Förderbandes 10 ermöglichen. Die gemäß Fig. 5 U-förmige Anordnung der Bordwandsegmente 32 ermöglicht vorteilhaft ein sicheres Aufnehmen der überschüssigen Länge des Fördergurtes 100, so daß dieser auch im Transport bzw. nicht benutztem Zustand stets sicher geführt wird.

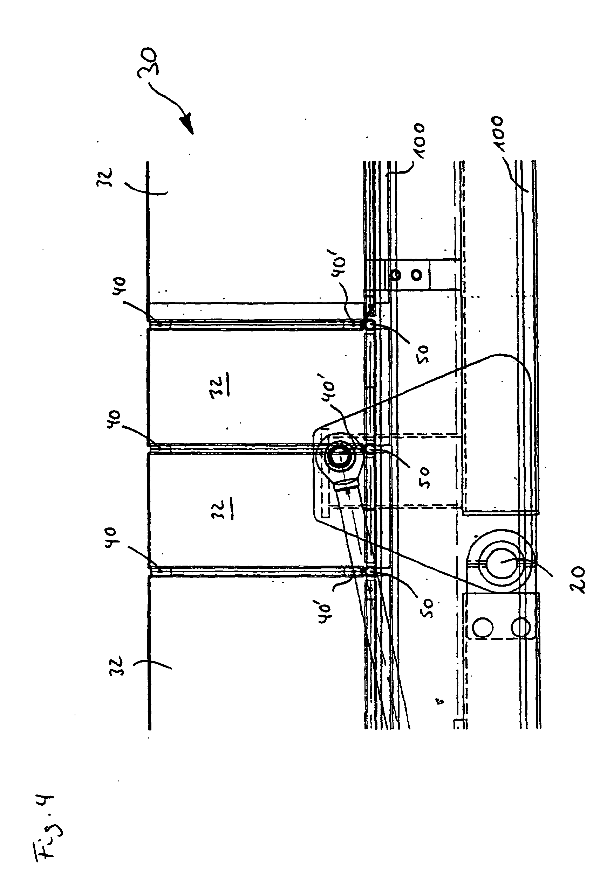

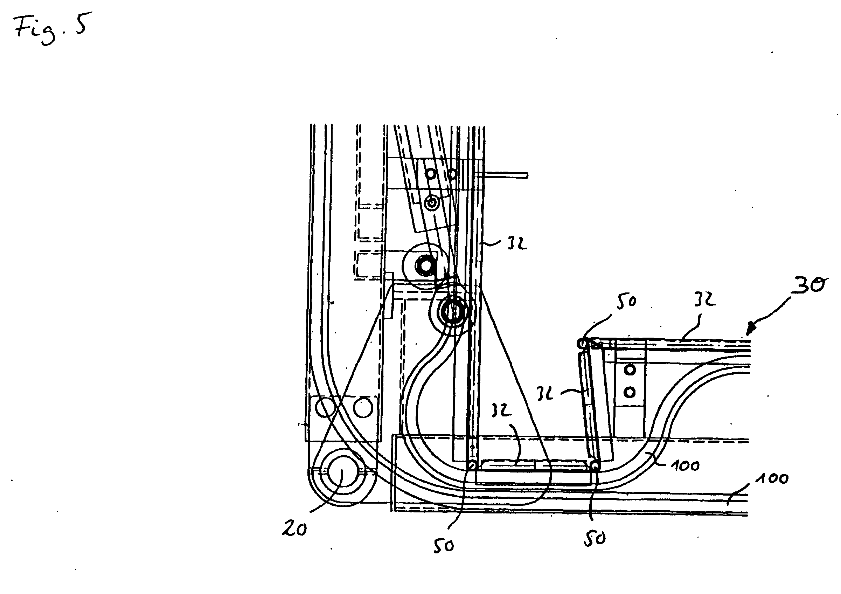

Fig. 6 zeigt eine Draufsicht auf das erfindungsgemäße Förderband 10 gemäß Fig. 2. Fig. 6 verdeutlicht, daß die Hydraulikkolbeneinheit 60 auf beiden Seiten des Förderbandes 10 vorgesehen ist, so daß sich ein im wesentlichen symmetrischer Aufbau ergibt. Neben den zwischen den Bordwandsegmenten 32 angeordneten Scharnieren 40, 40', von denen in Fig. 6 aus Gründen der Übersichtlichkeit nur zwei bezeichnet sind, ist es möglich, daß die Bordwand 30 auch in vom Förderbandgelenk 20 beabstandeten Bereichen derartige Scharniere zwischen Bordwandsegmenten 32 aufweist. Ebenso ist es denkbar, daß nicht nur ein sondern mehrere Förderbandgelenke 20 vorgesehen sind, so daß sich eine besonders kompakte Anordnung des Förderbandes 10 im eingeschwenkten Zustand ergibt.

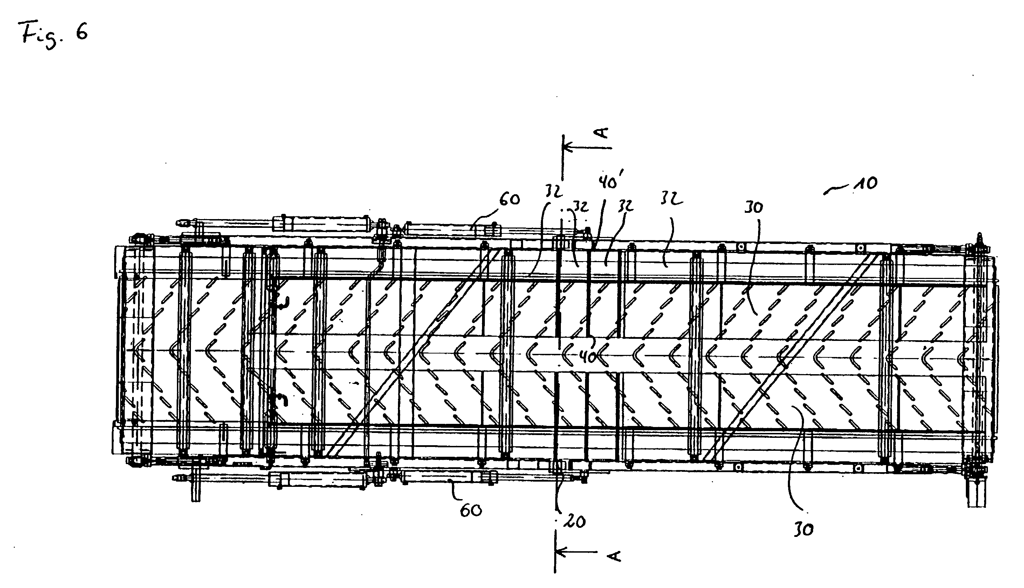

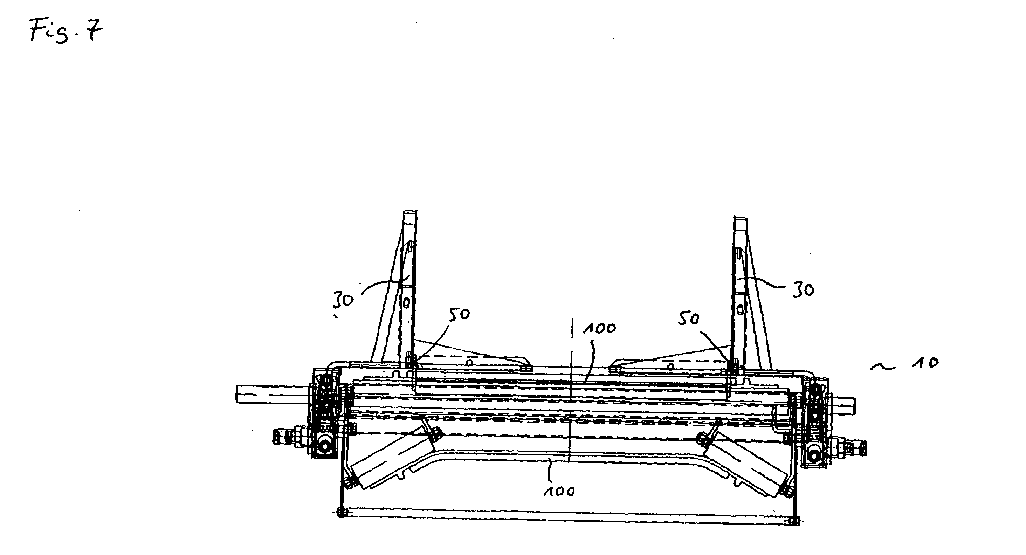

In Fig. 7 ist eine Schnittdarstellung durch das erfindungsgemäße Förderband gemäß Linie A-A in Fig. 6 dargestellt. Man erkennt die auf beiden Seiten des Förderbandes 10 angeordneten und senkrecht stehenden Bordwände 30, die eine seitliche Begrenzung des Fördergutes darstellen. Erfindungsgemäß sind die Bordwände 30 um die Gelenke 50 um eine Achse verschwenkbar, die sich in Längsrichtung der Bordwände 30 erstreckt, wie dies durch die Darstellung der eingeschwenkten Bordwände 30 verdeutlicht wird. Im eingeschwenkten Zustand erstrecken sich die Bordwände 30 parallel zur durch den Fördergurt 100 definierten Förderebene.

## Patentansprüche

1. Förderband (10) mit Bordwänden (30) zur seitlichen Fixierung von Fördergut, welches relativ zweinander verschwenkbare Teile aufweist, mit wenigstens einem Gelenk (20), um das ein Teil des Förderbands (10) verschwenkbar ist, wobei die Bordwände (30) zusammen mit dem Förderband (10) um das Gelenk (20) verschwenkbar sind,
**dadurch gekennzeichnet,**
**daß** jede Bordwand (30) wenigstens im Bereich des Gelenkes (20) des Förderbandes (10) um eine sich in ihrer Längsrichtung erstreckende Achse verschwenkbar ist und in ihrem verschwenkten Zustand um eine Achse verschwenkbar ist, die sich parallel zur Schwenkachse des Gelenkes (20) des Förderbandes (10) erstreckt wobei jede Bordwand (30) aus Segmenten (32) aufgebaut ist, die an den Randbereichen ihrer aneinandergrenzender Flächen mittels eines die Achse bildenden Scharniers (40, 40') in Verbindung stehen.

2. Förderband (10) nach Anspruch 1, **dadurch gekennzeichnet, daß** eines der Scharniere (40') der Segmente (32) mit einem Gelenk (50) in Verbindung steht, um das das Scharnier (40') um eine sich in Längsrichtung der Bordwände (30) erstreckende Achse verschwenkbar ist.

3. Förderband (10) nach Anspruch 3, **dadurch gekennzeichnet, daß** im Bereich des Gelenkes (20) des Förderbandes (10) mehrere Gelenke (50) vorgesehen sind, die jeweils mit einem Scharnier (40') der Bordwandsegmente (32) verbunden sind.

4. Förderband (10) nach einem oder mehreren der Ansprüche 1 bis 3, **dadurch gekennzeichnet, daß** die Bordwände (30) von dem Förderband (10) lösbar ausgeführt sind.

5. Förderband (10) nach einem oder mehreren der Ansprüche 1 bis 4, **dadurch gekennzeichnet, daß** eine Hydraulikkolbeneinheit (60) vorgesehen ist, bei der die Kolbenposition vom Verschwenkwinkel der relativ zueinander verschwenkten Teile des Förderbandes (10) abhängt und mittels derer die Teile des Förderbandes (10) im ausgeschwenkten Zustand arretierbar sind.

6. Förderband (10) nach einem oder mehreren der Ansprüche 1 bis 5, **dadurch gekennzeichnet, daß** das Gelenk (20) des Förderbandes (10) arretierbar ist.

7. Förderband (10) nach Anspruch 6, **dadurch gekennzeichnet, daß** das Gelenk (50), um das das Scharnier (40') um eine sich in Längsrichtung der Bordwände (30) erstreckende Achse verschwenkbar ist, eine Entriegelung aufweist, durch die die Arretierung des Förderbandgelenkes (20) lösbar ist.

## Claims

1. A belt conveyor (10) with side walls (30) for the lateral fixation of material to be conveyed, which belt conveyor has parts that can be swivelled relative to each other, comprising at least one joint (20) about which part of the belt conveyor (10) can be swivelled, wherein the side walls (30) can be swivelled about the joint (20) together with the belt conveyor (10),
**characterized in**
**that** at least in the vicinity of the joint (20) of the belt conveyor (10) each side wall (30) can be swivelled about an axis extending in longitudinal direction thereof and in its swivelled condition can be swivelled about an axis which extends parallel to the swivel axis of the joint (20) of the belt conveyor (10), each side wall (30) being composed of segments (32) which at the edge portions of their adjoining surfaces are connected by means of a hinge (40, 40') forming said axis.

2. The belt conveyor (10) as claimed in claim 1, **characterized in that** one of the hinges (40') of the segments (32) is connected with a joint (50) about which the hinge (40') can be swivelled about an axis extending in longitudinal direction of the side walls (30).

3. The belt conveyor (10) as claimed in claim 3, **characterized in that** in the vicinity of the joint (20) of the belt conveyor (10) a plurality of joints (50) are provided, which are each connected with a hinge (40') of the side wall segments (32).

4. The belt conveyor (10) as claimed in one or more of claims 1 to 3, **characterized in that** the side walls (30) of the belt conveyor (10) are designed so as to be releasable.

5. The belt conveyor (10) as claimed in one or more of claims 1 to 4, **characterized in that** a hydraulic piston unit (60) is provided, in which the piston position depends on the swivel angle of the parts of the belt conveyor (10) that have been swivelled relative to each other, and by means of which the parts of the belt conveyor (10) can be locked in the swivelled condition.

6. The belt conveyor (10) as claimed in one or more of claims 1 to 5, **characterized in that** the joint (20) of the belt conveyor (10) can be locked.

7. The belt conveyor (10) as claimed in claim 6, **characterized in that** the joint (50) about which the hinge (40') can be swivelled about an axis extending in longitudinal direction of the side walls (30) has an unlocking facility by means of which the locking of the belt conveyor joint (20) can be released.

## Revendications

1. Bande transporteuse (10) avec des parois de bord (30) pour la fixation latérale d'ún produit à transporter, qui présente des parties aptes à pivoter l'une relativement à l'autre, avec au moins une articulation (20) autour de laquelle une partie de la bande transporteuse (10) peut être amenée à pivoter, où les parois de bord (30) peuvent pivoter ensemble avec la bande transporteuse (10) autour de l'articulation (20), **caractérisée en ce que** chaque paroi de bord (30) peut être amenée à pivoter au moins au voisinage de l'articulation (20) de la bande transporteuse (10) autour d'un axe s'étendant dans sa direction longitudinale et peut être pivotée dans son état pivoté autour d'un axe qui s'étend parallèlement à l'axe de pivotement de l'articulation (20) de la bande transporteuse (10), où chaque paroi de bord (30) est constituée de segments (32) qui sont en liaison aux zones de bord de leurs faces avoisinantes au moyen d'une charnière (40, 40') constituant l'axe.

2. Bande transporteuse (10) selon la revendication 1, **caractérisée en ce que** l'une des charnières (40') des segments (32) est en liaison avec une articulation (50) autour de laquelle la charnière (40') peut être amenée à pivoter autour d'un axe s'étendant dans la direction longitudinale des parois de bord (30).

3. Bande transporteuse (10) selon la revendication 3, **caractérisée en ce que** sont prévues au voisinage de l'articulation (20) de la bande transporteuse (10) plusieurs articulations (50) qui sont reliées chacune à une charnière (40') des segments des parois de bord (32).

4. Bande transporteuse (10) selon l'une ou plusieurs des revendications 1 à 3, **caractérisée en ce que** les parois de bord (30) sont réalisées d'une manière amovible de la bande transporteuse (10).

5. Bande transporteuse (10) selon l'une ou plusieurs des revendications 1 à 4, **caractérisée en ce qu'**une unité à piston hydraulique (60) est prévue où la position du piston dépend de l'angle de pivotement des parties aptes à pivoter l'une relativement à l'autre de la bande transporteuse (10) et au moyen de laquelle les parties de la bande transporteuse (10) peuvent être arrêtées à l'état après pivotement.

6. Bande transporteuse (10) selon l'une ou plusieurs des revendications 1 à 5, **caractérisée en ce que** l'articulation (20) de la bande transporteuse (10) peut être arrêtée.

7. Bande transporteuse (10) selon la revendication 6, **caractérisée en ce que** l'articulation (50) autour de laquelle la charnière (40') peut être amenée à pivoter autour d'un axe s'étendant dans la direction longitudinale des parois de bord (30), présente un déverrouillage qui permet de déverrouiller l'arrêtage de l'articulation (20) de la bande transporteuse.
